(19) Europäisches Patentamt
European Patent Office
Office européen des brevets

(11) Veröffentlichungsnummer: **0 203 487**
**B1**

(12) # EUROPÄISCHE PATENTSCHRIFT

(45) Veröffentlichungstag der Patentschrift: **22.03.89**

(51) Int. Cl.⁴: **C 08 J 7/04**, C 09 D 3/80, C 09 D 3/76, C 08 L 33/06, C 08 L 27/06, C 08 L 27/16, C 08 L 69/00, C 09 D 3/49

(21) Anmeldenummer: **86106769.2**

(22) Anmeldetag: **17.05.86**

(54) **Verträgliche Polymermischungen.**

(30) Priorität: **23.05.85 DE 3518538**

(43) Veröffentlichungstag der Anmeldung: **03.12.86 Patentblatt 86/49**

(45) Bekanntmachung des Hinweises auf die Patenterteilung: **22.03.89 Patentblatt 89/12**

(84) Benannte Vertragsstaaten: **BE DE FR GB IT NL**

(56) Entgegenhaltungen:
**DE-B-1 269 799**
**GB-A-2 137 935**
**GB-A-2 146 647**

(73) Patentinhaber: **Röhm GmbH, Kirschenallee Postfach 4242, D-6100 Darmstadt 1 (DE)**

(72) Erfinder: **Liebler, Ralf, Dr., Alfred-Messel-Weg 12, D-6100 Darmstadt (DE)**
Erfinder: **Ringenberg, Werner, Hahlgartenstrasse 1, D-6108 Weiterstadt 1 (DE)**

**EP 0 203 487 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

*Gebiet der Erfindung*

Die Erfindung betrifft verträgliche Polymermischungen bestehend aus bestimmten Kunststoffen und Copolymerisaten auf Acrylat- bzw. Methacrylatbasis, die UV-Absorber enthalten. Die Polymermischungen eignen sich besonders zur Beschichtung von Kunststoffen.

*Stand der Technik*

In der Regel gelten unterschiedliche Polymerspecies als nicht miteinander verträglich, d.h. unterschiedliche Polymerspecies bilden bis hinab zugeringen Anteilen einer Komponente im allgemeinen keine homogene Phase aus, die durch völlige Mischbarkeit der Komponenten charakterisiert wäre.

Gewisse Ausnahmen von dieser Regel haben zunehmendes Interesse speziell bei den mit der theoretischen Deutung der Phänomene befaßten Fachleuten hervorgerufen. Die Mischbarkeit der Polymerspecies wird in erster Linie der niedrigen Mischungsentropie (wegen der langen Polymerketten) und der positiven Mischungsenergie zwischen den Polymeren zugeschrieben. Völlig kompatible Mischungen von Polymeren zeigen völlige Löslichkeit (Mischbarkeit) in allen Mischungsverhältnissen.

Eine zusammenfassende Darstellung über mischbare Polymersysteme findet sich z.B. bei D.R. Paul et al. in Polymer & Engineering Science 18, (16) 1225-34 (1978); J. Macromol. Sci. — Rev. Macromol. Chem. C. 18 (1) 109-168 (1980).

Zum Nachweis der Mischbarkeit wurde häufig die Glastemperatur Tg oder die sogenannte «Optische Methode» (Klarheit eines aus homogener Lösung des Polymergemischs gegossenen Films) herangezogen. (Vgl. Brandrup-Immergut, Polymer Handbook, Ed., III-211-213.) Als ein weiterer Test auf die Mischbarkeit von unter sich verschiedenen Polymeren wird das Auftreten der unteren kritischen Lösungstemperatur (Lower Crital Temperature = LCST) herangezogen.

Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte.

Beispiele für vorhandene Mischbarkeit stellen z.B. die Systeme Polyvinylidenfluorid mit Polymethylmethacrylat (PMMA) oder mit Polyethylmethacrylat dar. (US-PS 3 253 060, US-PS 3 458 391, US-PS 3 459 843.) Neuere Ergebnisse über «Polymer Blends» und mögliche Anwendung derselben werden von L.M. Robeson in Polym. Engineering & Science 24 (8) 587-597 (1984) berichtet.

Physikalische Untersuchungen an Mischungen von Polycarbonat (PC) mit Polymethylmethacrylat scheinen darauf hinzuweisen, daß spezifische Interaktion der beiden Homopolymeren im Gemisch vorliegt. (Chem. Abstr. 94, 175 780x.) Man hat dessen ungeachtet in vielfacher Weise versucht, die vorteilhaften Eigenschaften von Polycarbonat und Acrylharzen in Form von Mischungen zum Tragen zu bringen. Bei einem Methylmethacrylat/Styrol/Glycidylmethacrylat-Copolymeren konnte Kompatibilität mit Polycarbonat (PC) dadurch erreicht werden, daß man deren Gemisch zusammen mit Benzyldimethylamin extrudierte (JP-OS 82-117 563, Chem. Abstr. 98, 17556g).

Polymethylmethacrylat (PMMA) und PC sollen in Mischung als Formmasse gegenüber den Einzelkomponenten teilweise verbesserte mechanische Eigenschaften besitzen (GB-PS 1 182 807).

Ternäre Gemische aus Copolymerisaten eines Methacrylsäureesters mit einem Vinylaromaten und/ oder einem Vinylcyanid, einem Ethylen-Vinylacetat-Copolymeren sowie 40-95% Polycarbonat werden wegen guter thermischer, mechanischer und Verarbeitungseigenschaften empfohlen (JP-OS 49-041 444). Ebenfalls ternäre Gemische, die Methylmethacrylat (MMA)-Homo- oder Copolymerisate, Styrol-MMA-Copolymeren und Polycarbonat enthalten, werden als Formmasse angewendet (DE-OS 2 357 586). Aus der JP-OS 50-019 852 sind Harzmischungen aus PMMA, PC und einem Polyacetal bekannt. Die Schlagzähmodifikation von Polycarbonat durch Zusatz anderer Polymerer unter Bildung ternärer Mischungen ist ebenfalls mehrfach beschrieben. So empfiehlt die DE-OS 3 031 524 den Zusatz von Alkyl(meth)acrylatpolymeren und Olefin-Alkylacrylatpolymeren. Auch der Zusatz von Butadien-Styrol-Copolymeren neben Alkyl(meth)acrylatpolymeren zu Polycarbonat ist beschrieben worden (FR-OS 2 464 287, GB-PS 2 057 461), ebenso der Zusatz von Polypropylen (US-PS 4 245 058), organischen Siliconen (DE-OS 3 031 539), Polyester (US-PS 4 230 212), ABS-Copolymeren (DE-OS 3 248 709). Praktische Anwendung findet mit Polyolefin modifiziertes Polycarbonat in der Automobilindustrie. Weiter lassen sich Polycarbonat/Polybutylenterephthalat-Mischungen im Automobilbau anwenden.

Es ist indessen nicht zu erkennen, daß mit Hilfe der beschriebenen Polymermischungen qualitativ neue, technisch verwertbare Effekte hervorgebracht werden könnten.

Zu den Nachteilen, die viele Kunststoffe gegenüber metallischen oder mineralischen Werkstoffen aufweisen, gehört eine mehr oder minder große Empfindlichkeit gegenüber UV-Licht. Die beobachteten Schädigungen gleichen denen eines thermisch-oxidativen Abbaus; man beobachtet z.B. Verfärbung, Verpsrödung und Verschlechterung der physikalischen Kenndaten. Besonders deutlich bemerkbar werden diese Effekte bei Polyolefinen PVC, Polystyrol und modifiziertem Polystyrol, Polyvinylidenfluorid, Polycarbonat. Es hat daher nicht an Versuchen gefehlt, durch Zusatz effektiver UV-Stabilisatoren und Antioxidantien Polymere widerstandsfähiger gegen UV-Licht zu machen. Zur Stabilisierung gegen UV-Licht werden in erster Linie UV-Absorber zugesetzt, die UV-Licht im Strahlungsbereich 200-400 nm Wellenlänge absorbieren. (Ullmanns Encyklopädie der Techn. Chemie, 4. Auflage, Bd. 15, pg. 253 bis 266, Verlag Chemie 1978). Bei der Anwendung von UV-Absorbern gibt es indessen Probleme:

Die in der Praxis gebräuchlichen UV-Absorber für

Kunststoffe sind häufig flüchtig bei Temperaturen im Bereich der Herstellungs- und Verarbeitungsbedingungen von Kunststoffen wie beispielsweise Polycarbonat. Dies gilt z.B. für die wohl am weitesten verbreiteten Klassen von UV-Stabilisatoren für Kunststoffe, substituierte 2-Hydroxybenzophenone und sibstituierte Benzotriazole.

Derivate mit höheren Alkylseitenketten finden im allgemeinen bevorzugt Anwendung, weil sie geringere Flüchtigkeit im Verlauf der Verarbeitung zeigen. In der Literatur wird aber darauf hingewiesen, daß es eine Begrenzung für die Kettenlänge gibt, nämlich die Verträglichkeit mit dem Polymeren. Ist die Kettenlänge zu groß, so tendiert der UV-Absorber zur Unverträglichkeit (vgl. Modern Plastics Encyclopedia, 1978-1979, pg. 222, Mc Graw Hill). Die statistische Dotierung von Kunststoffen mit UV-Absorbern ist kein besonders rationelles Verfahren, wenn man Verluste bei der Bearbeitung in Betracht zieht und gleichzeitig beobachtet ein wie geringer Anteil der UV-Absorber tatsächlich zur Wirkung kommt. Man ist daher teilweise dazu übergegangen auf den Kunststofformkörpern eine den UV-Absorber erhaltende Lackschicht aufzubringen (vgl. z.B. DE-AS 1 694 273).

Man hat z.B. bei der Herstellung von Hohlkammerkunststofftafeln durch Koextrusion einer Kernschicht aus Polycarbonat und einer UV-Absorptionsschicht auf wenigstens einer Seite der Kernschicht vorgeschlagen, die Kernschicht in einem Mehrstoffextrusionswerkzeug wenigstens auf einer Seite mit einer UV-Absorptionsschicht, die wenigstens 2 Gew.-% eines flüchtigen UV-Absorbers enthält, zu verbinden und die UV-Absorptionsschicht auf der von der Kernschicht abgewandten Seite durch Koextrusion mit einer Deckschicht, die weniger als 2 Gew.-% an flüchtigen UV-Absorbern enthält, zu verbinden und den mehrschichtigen Strang nach dem Verlassen der Extrusionsdüse in einem Vakuumformkanal weiter zu behandeln. (DE-A 3 244 953.)

«Aus der GB-A 2 137 935 ist ein Verfahren zur Herstellung mehrschichtiger Kunststoff-Formkörper durch Koextrusion thermoplastischer Formmassen bekannt, wobei mindestens eine Schicht aus einer thermoplastischen Formmasse extrudiert wird, die ganz oder überwiegend aus einem Copolymerisat von Monomeren, die gegen UV-Licht schützende Bestandteile im Molekül aufweisen mit weiteren Monomeren besteht. Nach den üblichen Erfahrungen zu urteilen, war mit wechselseitiger Unverträglichkeit/Nichtmischbarkeit der beiden Polymerklassen zu rechnen, aus denen die zu schützende Schicht und die Schutzschicht jeweils bestehen. Die Lehre dieser Druckschrift betrifft eindeutig die Beschichtung, wobei offensichtlich auch im Bereich von Schichtdicken der schützenden Schicht von 10-100 µ unter Koextrusionsbedingungen keine Vermischung der Schichten zu erwarten war.»

*Aufgabe*

Es bestand nach wie vor ein Bedürfnis nach einem dauerhaften UV-Schutz für Kunststoffe, der die sonstigen Eigenschaften der Kunststoffe nicht negativ beeinflussen sollte. Voraussetzung dafür war z.B., daß ein UV-absorbierender Zusatz mit Kunststoffen verträglich sein sollte.

*Lösung*

Es wurde gefunden, daß eine Reihe von Kunststoffen mit gewissen Copolymerisaten auf Acrylat- bzw. Methacrylatbasis über weite Konzentrations- und Temperaturbereiche verträglich (mischbar) sind. Derartige verträgliche Mischungen MP («miscible polyblends») stellen sich als homogene Phase dar, die makroskopisch die Eigenschaften aufweisen, die man von einem einphasischen System erwartet. Im Falle von Mischungen transparenter Kunststoffe stellen sie sich als praktisch völlig klare einphasische Mischungen dar. Mischbare «Polyblends» zeigen in der Regel eine einzige Glastemperatur Tg. Die vorliegende Erfindung betrifft somit verträgliche (einphasische) Mischungen MP gebildet aus

I) einem polymeren Kunststoff K ausgewählt aus der Klasse der Polycarbonate (PC), Polyvinylchlorid (PVC) oder Polyvinylidenfluorid (PVDF) und

II) einem Copolymerisat P, das aus α) monomeren Estern der Acryl- und/oder der Methacrylsäure mit $C_1$-$C_{10}$-Alkoholen zu 40-99,99 Gew.-%, vorzugsweise 50-60 Gew.-% (bezogen auf die Copolymerisate P) und aus β) Monomeren der Formel I

$$\begin{array}{l} \qquad\;\; R_1 \;\; O \\ \qquad\;\;\, | \quad\; \| \\ H_2C = C - C - Y - Z \end{array} \qquad\qquad I$$

worin $R_1$ für Wasserstoff oder einen Methylrest, Y für Sauerstoff oder einen Rest $-NR_2-$ worin $R_2$ Wasserstoff oder einen Alkylrest mit 1 bis 6 Kohlenstoffatomen bedeutet und Z

(a) einen 2-Hydroxylphenyl-Benzotriazolrest bzw. Derivate

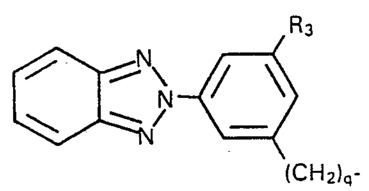

worin $R_3$ für Wasserstoff oder einen gegebenenfalls verzweigten Alkylrest mit 1 bis 12 C-Atomen und q für null oder für eine Zahl von 1 bis 4 stehen kann, steht, und die Bindung von Z über den Sauerstoff oder $-(CH_2)_q-$ oder direkt am Phenylrest erfolgen kann, wobei die jeweils freibleibende Position mit Wasserstoff besetzt sein soll, und gegebenenfalls noch Halogensubstituenten vorhanden sein können, und der Benzotriazolrest durch einen Alkylrest mit 1 bis 4 Kohlenstoffatomen oder Halogen substituiert sein kann,

(b) einen 2-Hydroxybenzo- oder -acetopenonrest

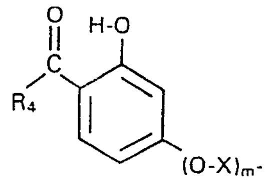

worin m für 0 oder 1 und X für einen gegebenenfalls mit Hydroxygruppen substituierten Alkylenrest mit 1 bis 4 Kohlenstoffatomen und $R_4$ für einen gegebenenfalls substituierten Phenyl- oder Methylrest steht,

(c) einen α-Cyano-β,β-diphenylrest

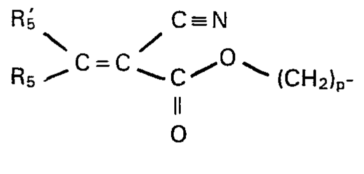

worin p für eine Zahl von 1 bis 4 und $R_5$ und $R_5'$ für einen gegebenenfalls mit einem $C_1$-$C_4$-Alkylrest substituierten Phenylrest stehen,

zu 0,01 bis 60 Gew.-%, bevorzugt 40-50% (bezogen auf die Copolymerisate P) und aus

(γ) weiteren Monomeren zu 0 bis 30 Gew.-%, vorzugsweise 0,5-10 Gew.-% (bezogen auf die Copolymerisate)

aufgebaut sind.

Das Molekulargewicht der Copolymerisate P (gemäß II) liegt im allgemeinen im Bereich 10 000 bis 70 000, vorzugsweise 20 000 bis 30 000. Die Bestimmung erfolgt durch Gelchromatographie. Die erfindungsgemäßen Mischungen MP können im Verhältnis 50-99,9 Gew.-% der Komponente I), zu 0,1 bis 50 Gew.-% der Komponente II) vorliegen.

Die erfindungsgemäßen Mischungen MP erfüllen alle im Stand der Technik aufgestellten Kriterien für verträgliche Mischungen (s. oben). Sie stellen sich z.B. in den üblicherweise in der praxis relevanten-Temperaturbereichen, d.h. von °C bis zum Erweichungspunkt als homogene Phase dar. Makroskopisch weisen sie die Eigenschaften auf, die man von einem einphasischen System erwarten kann, wie z.B. Isotropie gegenüber Einwirkungen von außen auf das System, soweit diese auch von vergleichbaren einphasischen Kunststoffen gezeigt wird.

Im Falle von Mischungen transparenter Kunststoffe stellen sich die erfindungsgemäßen Mischungen MP als praktisch völlig klare, einphasische Systeme dar. Als mischbare Polyblends zeigen sie, soweit untersucht, eine einzige Glastemperatur Tg und zwar unabhängig von der Art der Bestimmung (vgl. D.R. Paul, S. Newmann in «Polymer Blends», Vol. 1, pg. 16-20, Academie Press, 1978).

Sie bilden transparente Filme bzw. Fäden, die auch bei Vergrößerung im Phasenkontrastmikroskop bzw. Elektronenmikroskop — unabhängig vom Anfärbeverfahren — keine Heterogenität aufweisen.

Als unter die polymeren Kunststoffe K gemäß Komponente I fallend wurden oben folgende Kunststoffe genannt: Polycarbonate (PC). Im Einklang mit den üblichen Definitionen seien darunter die üblicherweise thermoplastischen Polycondensationsprodukte der Kohlensäure mit Diolen, die aus Einheiten $-O-A-O-\overset{\overset{O}{\|}}{C}-$ aufgebaut sind, wobei A z.B. für einen von Bisphenol A (2,2-Bis(4-hydroxyphenyl)propan oder 1,1-[4,4'-Dihydroxydiphenylcyclohexan oder 2,2-(4,4'-Dihydroxy-3,3'-5,5'-tetrachloridphenyl]--propan abgeleiteten Rest steht. (Vgl. R. Vieweg, L. Goerden «Kunststoff-Handbuch», Bd. VIII, Polyester, Hanser Verlag 1973.) In der Regel besitzen sie ein mittleres Molgewicht (Gew.-Mittel) im Bereich 20 000 - 75 000. Die Dichte liegt im allgemeinen bei 1,20 ± 0,03, der Fp. bei 150 - 300°.

Weiter wurden Polyvinylchlorid (PVC nach DIN 7728) genannt. Darunter seien wie üblich im allgemeinen thermoplastische Kunststoffe mit Einheiten $(-CH_2 - CHCl-)_r$ verstanden, wobei r üblicherweise für 500 - 2000 steht. Die Dichte liegt im allgemeinen bei 1,38 g/cm³, der Chlorgehalt bei ca. 56 Gew.-%. (Vgl. R. Vieweg, K. Krekeler in «Kunststoff-Handbuch», Bd. II, Polyvinylchlorid, Hanser Verlag, 1963.)

Weiter wurden Polyvinylidenfluoride (PVDF nach DIN 7728) genannt. Gemäß den üblichen Definitionen seien darunter (in der Regel thermoplastische) Polymerisate verstanden, die aus den Einheiten $(-CH_2-CF_2-)$ aufgebaut sind. Die Polymerisate weisen üblicherweise ein mittleres Molgewicht (Gew.-Mittel) im Bereich 100 000 bis 300 000 auf. Die Dichte liegt im allgemeinen bei 1,77 ± 0,02.

Für den Aufbau der Copolymerisate P gemäß Komponente II) gilt:

zu α) Als monomere Ester der Acryl- und/oder der Methacrylsäure mit $C_1$-$C_{10}$-Alkoholen seien insbesondere die der gegebenenfalls verzweigten Alkohole und/oder der Cycloalkanole (insbesondere mit 5/6 bzw. 8 Ringkohlenstoffatomen) genannt. Genannt seien Ester der $C_1$-$C_8$-Alkanole, insbesondere das Methylmethacrylat, Methylacrylat, Butylacrylat, Ethylmethacrylat, n- und iso-Propyl(meth)acrylat, i-Butylacrylat, Cyclohexyl(meth)acrylat, 3,3,5-Trimethylcyclohexyl(meth)acrylat.

zu β) Als Monomere der Formel I (a) seien besonders die genannt, die gemäß US-A 3 159 646 und 3 399 173 hergestellt werden können. Von besonderem Interesse sind das 2-(2'-Hydroxy-3-methacryloyl-amidomethyl-5'-alkyl)-benzotriazol (Alkyl = z.B. Methyl- oder Octyl, gegebenenfalls verzweigt) 2-(2'-Hydroxyphenyl)-5-methacryloylamido-benzotriazol, 2-(2'-Hydroxyphenyl)-5-methacryloylamidomethyl-benzotriazol.

Weiter seien hervorgehoben die Vertreter der Formel I (b), insbesondere Derivate der 2-Hydroxyphenzophenone z.B. wie sie nach der US-PS 3 107 199 zugänglich sind, speziell das 2-Hydroxy-4-methacryloxybenzophenon, das 2-Hydroxy-4-acryloxybenzophenon, das 2-Hydroxy-4-methacryloxy-5--tert.butyl-benzophenon, das 2-Hydroxy-4-methacryloxy-2',4'-dichlorbenzophenon, das 2-Hydroxy--4-(3-methacryloxy-2-hydroxypropoxy)benzophenon, 4-(Allyloxy)-2-hydroxybenzophenon, 3-Allyl--2-hydroxy-4,4'-dimethoxybenzophenon, 2,4-Dihydroxy-4'-vinylbenzophenon, ferner Derivate des Hydroxyacetophenons, zugänglich gemäß BE-PS 629 480.

Ferner seien Vertreter der Formel I (c) hervorgehoben, insbesondere Vinylverbindungen wie 4-Ethyl-α--cyano-β-phenylzimtsäurevinylester und ungesättigte Ether wie 2-Cyan-3,3-diphenylacryloxy)alkylenäther und (Meth)Acrylsäurederivate wie (2-Cyano--3,3-diphenylacryloxy)alkylenacrylsäureester, 2-(Acryloyl)oxyethyl-2-cyano-3,3-diphenylacrylat.

Die Herstellung der genannten Monomeren der Formel I ist aus der Literatur bekannt bzw. diesen Monomeren können nach bekannten Verfahren oder in Analogie zu an sich bekannten Verfahren hergestellt werden.

Zu γ) Im allgemeinen wird man auf die Copolymerisation dieser zusätzlichen Monomeren z.B. vom Typ des (Meth)acrylnitrils, des Styrols und seiner $C_1$-$C_4$-alkylierten Derivate, der polymerisationsfähigen Olefine mit bis zu 4 C-Atomen, der Vinyläther und Vinylester mit 3 bis 10 C-Atomen im Molekül (vgl. Ullmanns Encyklopädie, 3. Auflage, Bd. 14, S. 108-110), im Interesse der Kompatibilität der Polymeren K und P verzichten, in gewissen Fällen kann ihre Anwesenheit jedoch auch zulässig sein.

Auch die Herstellung der Copolymerisate P schließt an die Polymerisationsverfahren des Standes der Technik an. Eine besonders günstige Herstellungsweise liegt in der Perlpolymerisation (Suspensionspolymerisation) der Copolymerisate P. Bei der Perlpolymerisation werden bekanntlich die Monomeren als disperse Phase durch mechanische Kräfte, insbesondere Rühren in einem Nichtlösungsmittel als kontinuierlicher Phase verteilt und in dieser Form polymerisiert. Dabei ist das gebildete Polymerisat überwiegend im Monomeren löslich (vgl. Houben-Weyl, 4. Auflage, Bd. XIV/1, Maktromolekulare Stoffe, S. 406-433, G. Thieme-Verlag, 1961, H. Rauch-Puntigam, Th. Völker, Acryl- und Methacrylverbindungen, Springer-Verlag 1967).

Das Monomere bildet dabei kugelförmige Tröpfchen, die während des Polymerisationsvorgangs durch Zusatz von Dispergatoren (Schutzkolloiden) am Zusammenlaufen gehindert werden. Bei Verwendung von Wasser als kontinuierlicher Phase kommen primär schwerlösliche bis wasserunlösliche Monomere in Frage.

Als Verteiler kommen (wasserunlösliche) Salze anorganischer Säuren, wie Erdalkalisulfat oder Erdalkalicarbonate, Silikate sowie Aluminiumhydroxid, dessen Wirkung durch Zusatz sehr geringer Mengen von Emulgatoren, vgl. US-PS 2 673 194 und Makromolekulare Chem. 13, 80 (1954), unterstützt werden kann; oder hochmolekulare Naturstoffe oder synthetische Polymere in Frage. Zu der Gruppe der hochmolekularen Verteiler gehören wasserlösliche Kolloide, wie Polyvinylalkohol, teilweise verseiftes Polyvinylacetat, Methylcellulose, Stärke, Gelatine, Pektin, die Alkalisalze der Polyacrylsäure oder die Alkalisalze von Styrol- oder Vinylacetat-Maleinsäureanhydrid-Copolymeren u.a. (Vgl. Houben-Weyl, loc. cit. S. 411-430.) Das Verhältnis der wäßrigen zur Monomerenphase liegt meist bei 2:1 bis 4:1. Im Unterschied zu der Emulsionspolymerisation werden bei der Perlpolymerisation Starter eingesetzt, die in erster Näherung im Monomeren löslich, aber in Wasser unlöslich sind. Dazu gehören z.B. organische Peroxy- oder entsprechende Azoverbindungen wie Dibenzoylperoxid, Lauroylperoxid, t-Butylperester, z.B. t-Butylperpivalat, Azobis(isobutyronitril). Meistens liegt die angewandte Startmenge bei 0,1 bis 1 Gew.-%, bevorzugt um 0,5 Gew.-%, bezogen auf die Monomeren. Die Perlgröße läßt sich je nach den Erfordernissen zwischen 0,01 und einigen Millimetern einstellen.

Zur Einstellung gewünschter Molekulargewichtsbereiche können auch Regler angewendet werden. Als Regler seien die bekannten Mercaptoregler, insbesondere aliphatische Mercaptane (US-PS 2 450 000) wie z.B. Laurylmercaptan, Dodecylmercaptan genannt. Bei der praktischen Durchführung kann z.B. die Wasserphase mit dem Verteiler in der mit Rührwerk ausgestatteten Apparatur vorgelegt und auf Reaktionstemperatur erwärmt werden. Die Reaktionstemperatur liegt beispielsweise vorteilhaft im Bereich 80 ± 10°C.

Danach erfolgt die Zugabe der Monomeren zu der gerührten Vorlage, zweckmäßig auch die des Initiators und gegebenenfalls des Reglers. Die Rührgeschwindigkeit wird im allgemeinen im Bereich 200 bis 1000 Upm eingestellt. Die mittlere Perlgröße liegt vorteilhaft im Bereich 30 bis 200 µm. Als Anhalt kann eine Polymerisationsdauer von 1 bis 2 Stunden, zweckmäßigerweise gefolgt von einer thermischen Nachbehandlung, meist etwas oberhalb der Reaktionstemperatur während ca. 1 Stunde angesetzt werden. Die Perlen werden durch Abfiltrieren und Trocknen gewonnen. Alternativ können die Polymerisate P auch mittels Blockpolymerisation gegebenenfalls unter Druck hergestellt werden.

*Herstellung der Mischungen MP*

Die verträglichen Mischungen MP können z.B. als sogenannte «Mechanicals Polyblends« vorliegen, d.h. sie werden durch intensives mechanisches Vermischen der Komponenten I) und II) im Mixer, Extruder usw. erzeugt; oder sie können auch aus einem gemeinsamen Lösungsmittel heraus als sogenannte «solution cast polyblends» hergestellt werden. (Vgl. Kirk-Othmer «Encyclopedia of Chemical Technology» 3rd. Ed. Vol. 18, pg. 443-478, J. Wiley, 1982.) Die verträglichen Mischungen MP können gegebenenfalls noch weitere an sich übliche Zusätze wie Weichmacher, Gleitmittel, Stabilisatoren enthalten, soweit sie die Mischbarkeit der Komponenten bzw. den einphasischen Charakter der Mischungen nicht beeinträchtigen. Im allgemeinen liegt ihr Anteil an den Mischungen MP unter 3 Gew.-%.

Vorzugsweise kann dabei wie folgt vorgegangen werden:

*Mischungsverfahren*

Man erzeugt zunächst Mischungen der Komponenten I) und II) wobei vorteilhafterweise von Granulat wie z.B. Polycarbonatgranulat und dem Copolymerisat P in Form beispielsweise eines Perlpolymerisats ausgegangen wird unter Verwendung langsam laufender Mischaggregate wie z.B. Trommel- Rhönrad-, Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282

bis 311, Verlag Chemie.) Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300°C in Knetern oder vorzugsweise Extrudern, z.B. Ein- oder Mehrschneckenextruder oder gegebenenfalls in Extrudern mit oszillierender Schnecke und Scherstiften (z.B. im BUSSCO-Kneter).

Man kann nach diesen Verfahren Gleichkorngranulate )z.B. Heißabschlag, Würfelform, Rundkorn) herstellen. Die Korngröße der Granulate liegt dabei im Bereich 2 bis 5 mm.

*Vorteilhafte Wirkungen der Mischungen MP*

Als bevorzugtes Anwendungsgebiet für die erfindungsgemäßen verträglichen Mischungen MP sei die Beschichtung von Kunststoffen, insbesondere von Polycarbonat, Polyvinylchlorid und Polyvinylidenfluorid genannt. Die Beschichtung kann in an sich bekannter Weise, beispielsweise durch Lackieren, Coextruieren, Folienkaschieren vorgenommen werden. Im allgemeinen wendet man Schichtdicken im Bereich von 10 bis 100 µm an.

Die erfindungsgemäßen verträglichen Mischungen bieten sich ferner mit Vorteil für folgende Anwendungen an:

— Zur Coextrusion von Polycarbonat-Platten bzw. sogenannten Stegdoppel- oder Dreifachplatten mit Mischungen MP aus Polycarbonat (PC) und Copolymerisaten P. (Vgl. DE-OS 1 609 777.) Dabei kann zweckmäßig von der Technik gemäß GB-A 2 137 935 Gebrauch gemacht werden.

Als besonders vorteilhaft hat sich dabei erwiesen, daß das Abdampfen des UV-Absorbers unterbleibt, daß eine sehr gute Haftung mit dem Untergrund eintritt, da beides, Untergrund und Deckschicht weitgehend aus dem gleichen Material bestehen. Ferner treten keine Verträglichkeitsprobleme zwischen Deckschicht und Substrat auf, was sich auch hinsichtlich der Verwendung von Regranulat zum Vorteil auswirkt.

Hingewiesen sei auch auf die hohe thermische Stabilität der Mischungen aus PC und den polymeren UV-Absorbern als Coextrusionsmasse.

Ferner haben sich die Mischungen MP als Schutzlacke für PVC bewährt, die aus PVC und Copolymerisation P bestehen. Weiter sind UV-Schutzfolien mit Barriere-Eigenschaften für Wasserdampf leicht herstellbar, die sich z.B. gut für Flugzeugscheiben eignen. Genannt seien Mischungen MP aus PVDF und einem Copolymerisat P aus Methylmethacrylat und 3-(2-Benzotriazolyl)-2-hydroxi-5-tert.octylbenzylmethacrylamid.

Die nachfolgenden Beispiele dienen zur Erläuterung der Erfindung:

Die Bestimmung der Glastemperatur ($T_{Glas}$ wurde mittels Differential Scanning Calorimetry (DSC) vorgenommen. (Vgl. Edith A. Turi, Ed. «Thermal Characterization of Polymeric Materials», Pg. 165 ff., Academic Press, 1981.)

Die VICAT-Erweichungstemperaturen (VST/B) werden nach DIN 53 460/ISO 306, der Schmelzindex (MFI) nach DIN 53 735/ISO/R 1133, die Rohdichte ($d_R$) nach DIN 53 479/ISO/R 483 bestimmt.

Die verwendeten polymeren Kunststoffe K können Polycarbonate darstellen, beispielsweise vom Typ ®MAKROLON (Bayer AG), wobei bedeutet:

| | MW | VST/B °C | MFI 9/10 min | $d_R$ g/cm³ |
|---|---|---|---|---|
| ®MAKROLON 1143 | | | | |
| ®MAKROLON 2400 | 24 000 | 145 | 1 -19 | 1,2 |
| ®MAKROLON 2800 | 28 000 | 148 | 7 -10 | 1,2 |
| ®MAKROLON 3100 | 31 000 | 150 | 3,5- 5 | 1,2 |
| ®MAKROLON 3200 | 32 000 | 150 | 3,5- 5 | 1,2 |

Weiter kann Polyvinylchlorid verwendet werden, beispielsweise vom Typ ®VINNOL (Wacker AG, Bezeichnung nach DIN 7746 : M 6160G) wobei folgende Eigenschaftswerte gelten: Viskositätszahl (nach DIN 53 726) = 92 cm³/g, Dichte (nach DIN 53 479) = 1,39 g/cm³, Chlorgehalt (nach DIN 53 747) = 56%. Ferner eignet sich Polyvinylidenchlorid, beispielsweise vom Typ ®SOLEV (Solvay S.A.), z.B. ®SOLEV X8N-XION mit einer VICAT-Erweichungstemperatur (VST) von 145-151°C und einer Dicke von 1,78 g/cm³.

Die Bestimmung der Korngrößen kann nach Ullmanns loc. cit., 4. Auflage, Bd.2, pg. 24-69, vorgenommen werden. Die Bestimmung der Viskosität $\eta_{spez/c}$ wird nach den VorschriftenDIN 1342, 51 562 und 7745 ($CHCL_3$ im Micro-Ubbelohde-Viskosimeter; vgl. auch Houben-Weyl, Bd. 14/1, pg. 81-84, Georg-Thieme-Verlag, Stuttgart, 1961) vorgenommen.

*Beispiel 1*

*Herstellung der Copolymerisate P durch Perlpolymerisation*

In einem 2 l-Rundkolben, versehen mit Kühler, Thermometer und Rührwerk, werden 1000 Teile Wasserphase, die 1 Teil $Al(OH)_3$ und 0,01 Teile Naalkylsulfonat als Verteilersystem enthalten, auf 80°C aufgeheizt. Bei dieser Temperatur erfolgt zuerst die Zugabe des bei Raumtemperatur festen Monomeren der Formel I, d.h. des polymerisierbaren UV-Absorbers (225 Teile) und anschließend 275 Teile des restlichen Monomeren ( ), das 5 Teile Lauroylperoxid als Initiator und 5 Teile Dodecylmercaptan als Regler enthält.

Die Polymerisationszeiten liegen je nach Monomerenzusammensetzung zwischen 1-2 Stunden bei 80°C sowie 1 Stunde Nachtemperung bei 85°C.

Die Korngrößen liegen zwischen 50-200 µm.

Nach der Vorschrift des Beispiels 1 werden die in der Tabelle I aufgeführten Copolymerisate P hergestellt.

*Beispiel 2*

*Herstellung der verträglichen Polymermischungen MP*

85 Gewichtsteile granuliertes Polycarbonat (®MAKROLON 2800) werden mit 15 Gew.-Teilen eines

Perlpolymerisats aus 55 Gew.-% Methylmethacrylat und 45 Gew.-% 3-(2-Benztriazolyl)-2-hydroxy-5-tert.octylbenzylmethacrylamid während 3-5 Minuten in einem Trommelmischer gemischt. Anschließend gibt man die Mischung in einen Einschneckenextruder (Bauart Reiffenhäusser, Schneckendurchmesser 30 mm, Länge: Durchmesser = 21) und extrudiert bei 240°C und einer Verweilzeit von 3-4 Minuten. Die erhaltenen Schmelzstränge werden mittels eines Granulators zerkleinert.

TABELLE

Verträgliche Mischungen MP

| | Zusammensetzung | | | | | | Eigenschaften | |
|---|---|---|---|---|---|---|---|---|
| Beispiel Nr. | Komponente I Gew.-Teile | Polymer Kunststoff K | Komponente II Gew.-Teile | Copolymerisat P [3] aus | Tg [°C] | $\eta_{sp/c}$ [ml/g] | Aussehen der Mischung MP | Tg [°C] |
| 3 | 80 | PC (Makrolon 1143®) [1] | 20 | MMA/BHM [2] (55:45 Gew.-Tle) | 95 | 20 | klar, gelblich | 120 |
| 4 | 85 | PC » 1143®) | 15 | » | 95 | 11 | » | 130 |
| 5 | 85 | PC » 2400®) | 15 | » | 95 | 13 | » | 127 |
| 6 | 85 | PC » 2800®) | 15 | » | 95 | 21 | » | 128 |
| 7 | 85 | PC » 3100®) | 15 | MMA/BHM [2] (50:50 Gew.-Tle) | 94 | 13 | » | 126 |
| 8 | 85 | PC » 3200®) | 15 | » | 94 | 20 | » | 132 |
| 9 | 85 | PC » 3100®) | 15 | MMA/MA/BHM [2] (50:5:45 Gew.-Tle) | 92 | 13 | » | 136 |
| 10 | 85 | PC » 3100®) | 15 | MMA/BA/BHM [2] (50:5:45 Gew.-Tle) | 88 | 16 | » | 132 |

[1] Polycarbonat: Handelsprodukt Makrolon 1143® usw. der Bayer AG

[2] Die Abkürzungen stehen für die folgenden Monomeren:
MMA = Methylmethacrylat
BHM = 3-(2-Benztriazolyl)-2-hydroxy-5-tert.octylbenzylmethacrylamid
MA = Methylacrylat
BA = Butylacrylat

[3] Sämtliche Molekulargewichte der Copolymerisate P liegen im Bereich $1 \cdot 10^4$ bis $1 \cdot 10^5$.

Ähnlich gute Ergebnisse werden auch mit 2-α-Cyano-β,β-(diphenylacryloyloxy)ethyl-1-methacrylat, 2-Hydroxy-4--(2-hydroxy-3-methacryloyloxy)-propoxybenzophenon, 2-Hydroxy-4-acryloyloxyethyloxybenzophenon, 2-(2-Hydroxy-5-vinylphenyl)-2-benzotriazol erzielt.

TABELLE (Fortsetzung)

| | Zusammensetzung | | | | | | Eigenschaften | |
|---|---|---|---|---|---|---|---|---|
| Beispiel Nr. | Komponente I Gew.-Teile | Polymer Kunststoff K | Komponente II Gew.-Teile | Copolymerisat P [3] aus | Tg [°C] | $\eta_{sp/c}$ [ml/g] | Aussehen der Mischung MP | Tg [°C] |
| 11 | 98 | PC (®MAKROLON 1143) [1] | 2 | MMA/BHM [2] (40:60 Gew.-Teile) | 93 | 17 | klar, gelblich | 145 |
| 12 | 70 | PC » | 30 | MMA/BHM [2] (99,9:0,1 Gew.-Teile) | 98 | 29 | » | 125 |
| 13 | 99 | PC » | 1 | BA/HB [2] (70:30 Gew.-Teile) | −10 | 10 | » | 143 |
| 14 | 97 | PC » | 3 | EMA/HMB [2] (95:5 Gew.-Teile) | 70 | 11 | » | 138 |
| 15 | 85 | PC » | 15 | MMA/CEM [2] (80:20 Gew.-Teile) | 92 | 14 | » | 130 |
| 16 | 90 | PC » | 10 | MMA/HBP [2] (90:10 Gew.-Teile) | 88 | 18 | » | 132 |

TABELLE (Fortsetzung)

| Beispiel Nr. | Zusammensetzung Komponente I Gew.-Teile | Polymer Kunststoff K | Komponente II Gew.-Teile | Copolymerisat P [3] aus | Tg [°C] | $\eta_{sp/c}$ [ml/g] | Eigenschaften Aussehen der Mischung MP | Tg [°C] |
|---|---|---|---|---|---|---|---|---|
| 17 | 85 | PVC (®VINNOL Y61M) [3] | 15 | MMA/BHM [2] (55:45 Gew.-Teile) | 96 | 38 | klar, gelblich | 75 |
| 18 | 50 | PVDF (®SOLEV XP8N) [4] | 50 | MMA/BHM [2] (50:50 Gew.-Teile) | 100 | 40 | » | 88 |

[1] Polycarbonat: Handelsprodukt ®MAKROLON 1143 usw. der Bayer AG
[2] Die Abkürzungen stehen für die folgenden Monomeren:

MMA = Methylmethacrylat
BHM = 3-(2-Benztriazolyl)-2-hydroxy-5-tert.octylbenzylmethacrylamid
BA = Butylacrylat
HB = 2-(2'-Hydroxyphenyl)-5-methacryloylamid-benztriazol
EMA = Ethylmethacrylat
HMB = 2-(2'-Hydroxyphenyl)-5-methacrylamido-methylbenztriazol
CEM = 2-(2-Cyano-3,3-diphonylacryloylamido-ethyl-methacrylol
HBP = 2-(Hydroxy-3-methacryloyloxy-benzophenon

[3] Polyvinylchlorid: Handelsprodukt ®VINNOL Y 61M der Wacker AG
[4] Polyvinylidenfluorid: Handelsprodukt ®SOLEV X P8N der Solvay S.A.

**Patentansprüche**

1. Verträgliche (einphasische) Polymermischungen, dadurch gekennzeichnet, daß die verträglichen Polymermischungen MP aus

I) einem polymeren Kunststoff K ausgewählt aus der Klasse der Polycarbonate (PC), Polyvinylchlorid (PVC) oder Polyvinylidenfluorid (PVDF) und

II) einem Copolymerisat P, das aus

α) monomeren Estern der Acryl- und/oder der Methacrylsäure mit $C_1$-$C_{10}$-Alkoholen zu 40-99,99 Gew.-%, (bezogen auf die Copolymerisate P) und aus

β) Monomeren der Formel I

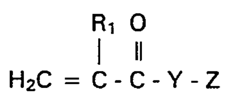

I

worin $R_1$ für Wasserstoff oder einem Methylrest, Y für Sauerstoff oder einen Rest $-NR_2-$ worin $R_2$ Wasserstoff oder einen Alkylrest mit 1 bis 6 Kohlenstoffatomen bedeutet und Z

(a) einen 2-Hydroxylphenyl-Benzotriazolrest bzw. Derivate

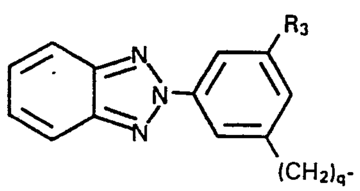

worin $R_3$ für Wasserstoff oder einen gegebenenfalls verzweigten Alkylrest mit 1 bis 12 C-Atomen und q für null oder für eine Zahl von 1 bis 4 stehen kann, steht, und die Bindung von Z über den Sauerstoff oder $-(CH_2)_q-$ oder direkt am Phenylrest erfolgen kann, wobei die jeweils freibleibende Position mit Wasserstoff besetzt sein soll, und gegebenenfalls noch Halogensubstituenten vorhanden sein können, und der Benzotriazolrest durch einen Alkylrest mit 1 bis 4 Kohlenstoffatomen oder Halogen substituiert sein kann,

(b) einen 2-Hydroxybenzo- oder -acetopenonrest

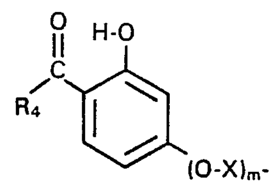

worin m für 0 oder 1 und X für einen gegebenenfalls mit Hydroxygruppen substituierten Alkylenrest mit 1 bis 4 Kohlenstoffatomen und $R_4$ für einen gegebenenfalls substituierten Phenyl- oder Methylrest steht,

(c) einen α-Cyano-β,β-diphenylrest

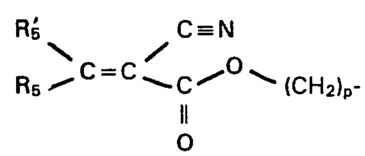

worin p für eine Zahl von 1 bis 4 und $R_5$ und $R_5'$ für einen gegebenenfalls mit einem $C_1$-$C_4$-Alkylrest substituierten Phenylrest stehen,

zu 0,01 bis 60 Gew.-%, bevorzugt 40-50% (bezogen auf die Copolymerisate P) und aus

γ) weiteren Monomeren zu 0 bis 30 Gew.-%, vorzugsweise 0,5-10 Gew.-% (bezogen auf die Copolymerisate) aufgebaut ist,

bestehen.

2. Verträgliche Polymermischungen MP gemäß Anspruch 1, dadurch gekennzeichnet, daß die Komponente I zu der Komponente II im Gewichtsverhältnis 50 bis 99,9 Gew.-% zu 0,1 bis 50 Gew.-% steht.

3. Verträgliche Polymermischungen MP gemäß den Ansprüchen 1 und 2, dadurch gekennzeichnet, daß das gelchromatographisch ermittelte Molekulargewicht der Copolymerisate P im Bereich 10 000 bis 70 000 liegt.

4. Verträgliche Polymermischungen MP gemäß den Ansprüchen 1 bis 3, dadurch gekennzeichnet, daß sie eine einzige Glastemperatur Tg besitzen.

5. Verträgliche Polymermischungen MP gemäß den Ansprüchen 1 bis 4, dadurch gekennzeichnet, daß die Copolymerisate P vor dem Mischen eine Glastemperatur Tg von −20 bis +150°C besitzen.

6. Verträgliche Polymermischungen MP gemäß den Ansprüchen 1 bis 5, dadurch gekennzeichnet, daß die Copolymerisate P nach dem Perl-Polymerisationsverfahren hergestellt werden.

7. Verträgliche Polymermischungen MP gemäß Anspruch 1, dadurch gekennzeichnet, daß sie durch Mischen der Komponenten I und II hergestellt wurden.

8. Verfahren zur Beschichtung von Kunststoffen mit einer Polymerschicht, dadurch gekennzeichnet, daß man zur Beschichtung Polymermischungen MP gemäß Anspruch 1 verwendet.

**Claims**

1. Compatible (single-phase) polymer mixtures, characterised in that the compatible polymer mixtures MP consists of:

I) a polymeric plastics K selected from the category comprising the polycarbonates (PC), polyvinylchloride (PVC) of polyvinylidine fluoride (PVDF) and

II) a copolymer P which is synthesized from

α) monomeric esters of acrylic and/or methacrylic acid with $C_1$ to $C_{10}$ alcohols in an amount of from 40 to 99.99% by weight (based on the copolymere P) and

β) monomers of formula I

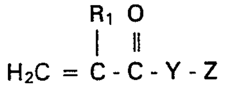

I

wherein $R_1$ represents hydrogen or a methyl group, Y represents oxygen or a group $-NR_2-$ wherein $R_2$ represents hydrogen or an alkyl group with 1 to 6 carbon atoms and Z represents

(a) a 2-hydroxyphenyl-benzotriazene group or derivatives

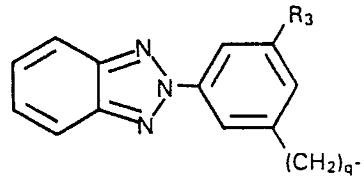

wherein $R_3$ represents hydrogen or an optionally branched alkyl group with 1 to 12 carbon atoms and q represents zero or a number from 1 to 4, and Z may be bonded via the oxygen or $-(CH_2)_q-$ or directly to the phenyl group, whilst the position left free may be occupied by hydrogen, and optionally halogen substituents may also be present, and the benzotriazene group may be substituted by an alkyl group with 1 to 4 carbon atoms or halogens,

(b) a 2-hydroxybenzo- or -acetophenone group

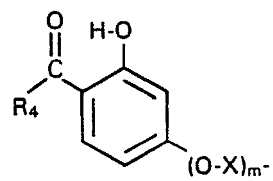

wherein m represents 0 or 1 and X represents an alkyl group with 1 to 4 carbon atoms optionally substituted by hydroxy groups and $R_4$ represents an optionally substituted phenyl or methyl group,

(c) an α-cyano-β,β-diphenyl group

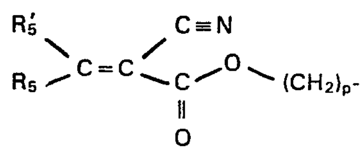

wherein p represents a number from 1 to 4 and $R_5$ and $R_5'$ represent a phenyl group optionally substituted by a $C_1$-$C_4$ alkyl group,

in an amount of from 0.01 to 60% by weight, based on the copolymers P, and optionally from

γ) other monomers in an amount from 0 to 30% by weight (based on the copolymers P).

2. Compatible polymer mixtures MP as claimed in claim 1, characterised in that component I is present in a ratio by weight of from 50 to 99.9% by weight to 0.1 to 50% by weight relative to component II.

3. Compatible polymer mixtures MP as claimed in claims 1 and 2, characterised in that the molecular weight of copolymer P determined by gel chromatography is in the range from 10,000 to 70,000.

4. Compatible polymer mixtures MP as claimed in claims 1 to 3, characterised in that they have a single glass transition temperature Tg.

5. Compatible polymer mixtures MP as claimed in claims 1 to 4, characterised in that, before mixing, the copolymers P have a glass transition temperature Tg of from −20 to +150°C.

6. Compatible polymer mixtures MP as claimed in claims 1 to 5, characterised in that the copolymers P are prepared by the bead polymerisation method.

7. Compatible polymer mixtures MP as claimed in claim 1, characterised in that they are prepared by mixing components I and II.

8. Process for coating plastics with a polymer coating, characterised in that polymer mixtures MP as claimed in claim 1 are used for the coating.

## Revendications

1. Mélanges compatibles (en une seule phase), caractérisés en ce que ces mélanges compatibles MP se composent de:

I) une matière plastique polymère K choisie dans la classe des polycarbonates (PC), des chlorures de polyvinyle (PVC) ou des fluorures de polyvinylidène (PVDF) et

II) un copolymère P qui est constitué par:

α) des esters monomères de l'acide acrylique et/ou méthacrylique et d'alcools en $C_1$-$C_{10}$, pour 40 à 99,99% en poids (par rapport au copolymère P),

β) des monomères de formule I

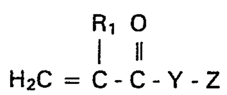 I

dans laquelle $R_1$ est mis pour un atome d'hydrogène ou un radical méthyle, Y est mis pour un atome d'oxygène ou pour un radical $-NR_2-$, $R_2$ représentant un atome d'hydrogène ou un radical alkyle à 1-6 atomes de carbone, et Z est mis pour:

(a) un radical 2-hydroxyphényl-benzotriazole ou ses dérivés de formule

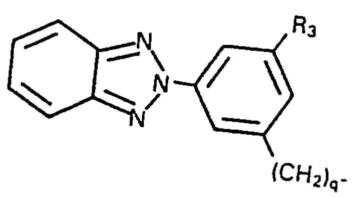

dans laquelle $R_3$ est mis pour un atome d'hydrogène ou un radical alkyle à 1-12 atomes de carbone éventuellement ramifié, q est mis pour 0 ou pour un nombre de 1 à 4, la liaison de Z peut s'effectuer par l'intermédiaire de l'atome d'oxygène ou de $-(CH_2)_q-$ ou directement sur le radical phényle, la position qui reste libre pouvant être occupée par un atome d'hydrogène, des substituants halogènes pouvant éventuellement être encore présents et le radical benzotriazole pouvant être substitué par un radical alkyle à 1-4 atomes de carbone ou par un atome d'halogène,

(b) un radical 2-hydroxybenzo- ou -acétophénone de formule

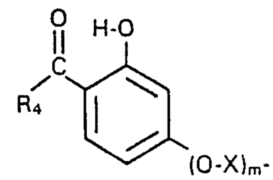

dans laquelle m est mis pour 0 ou 1, X est mis pour un radical alkylène à 1-4 atomes de carbone, éventuellement substitué par des groupes hydroxy, et $R_4$ est mis pour un radical phényle ou méthyle éventuellement substitué,

(c) un radical α-cyano-β,β-diphényle de formule

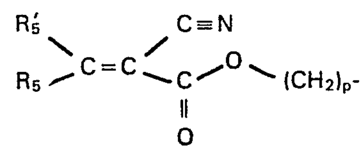

dans laquelle p est mis pour un nombre de 1 à 4 et $R_5$ et $R_5'$ sont mis chacun pour un radical phényle éventuellement substitué par un radical alkyle en $C_1$-$C_4$,

pour 0,01 à 60% en poids (par rapport au copolymère P), et le cas échéant

γ) d'autres monomères, pour 0 à 30% en poids (par rapport au copolymère P).

2. Mélanges de polymères compatibles MP selon la revendication 1, caractérisés en ce que le composant I est au composant II dans un rapport en poids de 50-99,9% en poids à 0,1-50% en poids.

3. Mélanges de polymères compatibles MP selon la revendication 1 ou 2, caractérisés en ce que le poids moléculaire des copolymères P, déterminé par chromatographie de filtration sur gel, se situe dans la gamme de 10 000 à 70 000.

4. Mélanges de polymères compatibles MP selon l'une quelconque des revendications 1 à 3, caractérisés en ce qu'ils ont une unique température de transition vitreuse Tg.

5. Mélanges de polymères compatibles MP selon l'une quelconque des revendications 1 à 4, caractérisés en ce qu'avant leur mélange, les copolymères P ont une température de transition vitreuse Tg de −20 à +150°C.

6. Mélanges de polymères compatibles MP selon l'une quelconque des revendications 1 à 5, caractérisés en ce que les copolymères P sont préparés par le procédé de polymérisation en perles.

7. Mélanges de polymères compatibles MP selon la revendications 1, caractérisés en ce qu'ils sont préparés par mélange des composants I et II.

8. Procédé d'enduction de matières plastiques avec une couche de polymère, caractérisé en ce qu'on utilise, pour l'enduction, des mélanges de copolymères P selon la revendication 1.